# EUROPÄISCHE PATENTSCHRIFT

(11) **EP 3 398 494 B1**
(45) Veröffentlichungstag und Bekanntmachung des Hinweises auf die Patenterteilung: **07.07.2021**
(21) Anmeldenummer: 18170823.1
(22) Anmeldetag: 04.05.2018
(51) Int. Cl.: A47J 37/07

(54) **GRILLGERÄT**
BARBECUE
RÔTISSOIRE

(30) Priorität: 04.05.2017 DE 202017102648 U
(43) Veröffentlichungstag der Anmeldung: 07.11.2018
(73) Patentinhaber: Enders Colsman AG, 58791 Werdohl (DE)
(72) Erfinder: GLOGER, Michael, 58791 Werdohl (DE)
(74) Vertreter: Haverkamp, Jens

(56) Entgegenhaltungen:
- EP-B1- 2 785 227
- WO-A1-01/22854
- WO-A1-2009/105099
- DE-U1-202016 106 951
- DE-U1-202017 100 811
- US-A1- 2015 257 594

## Beschreibung

Die Erfindung betrifft einen Grill mit einer oberseitig offenen, durch einen Boden und eine umlaufende Seitenwand bereitgestellten Wannenstruktur, die ihrerseits in einem Gehäuse angeordnet ist, zum Ansammeln von Garflüssigkeiten, mit einem in der Wannenstruktur angeordneten Brennstoffbehälter, dessen Boden von dem Boden der Wannenstruktur und dessen in radialer Richtung nach außen weisender Abschluss von der umlaufenden Seitenwand der Wannenstruktur beabstandet sind, mit einer Luftzuführung zum unterseitigen Zuführen von Luft in den Brennstoffbehälter und mit einem sich über die oberseitige Öffnung der Wannenstruktur erstreckenden Rost.

Ein solcher Grill, der auch als Gargerät angesprochen werden kann, kann aufgrund des in einer Wannenstruktur angeordneten Brennstoffbehälters und einer definierten Luftzuführung rauchfrei betrieben werden. Somit kann ein solcher Grill auch als Tischgrill eingesetzt werden. Die Anordnung des Brennstoffbehälters innerhalb der Wannenstruktur, die ihrerseits in einem Gehäuse angeordnet ist, stellt in Bezug auf den Brennstoffbehälter eine ausreichende Wärmeisolierung nach außen hin bereit. Verbrannt wird in dem Brennstoffbehälter als Brennstoff Holzkohle. Der Grill verfügt über eine regelbare Luftzufuhr zum Einstellen der Glühtemperatur der Holzkohle. Der Brennstoffbehälter weist eine umlaufende Wand auf. Diese weist eine Siebstruktur auf, wobei es sich um ein Metallgestrick oder auch um ein Lochblech oder dergleichen handeln kann. Diese Wand lässt die beim Glühen der Holzkohle entstehende Wärme durch und, da aus Eisenmetall hergestellt, wird bei einem Betrieb des Grills zum Wärmestrahler.

Ein solcher Grill ist aus EP 2 785 227 B1 bekannt. Der in diesem Stand der Technik als Holzkohlekammer angesprochene Brennstoffbehälter ist zylindrisch ausgeführt und umfasst einen in seiner Fläche gelochten abnehmbaren Deckel. Über die obere Öffnung der Wannenstruktur erstreckt sich ein aus einzelnen Drahtstäben zusammengesetzter Rost.

Innerhalb der Wannenstruktur ist der Brennstoffbehälter zentral mit Abstand zum Boden der Wannenstruktur angeordnet. Der Brennstoffbehälter sitzt in einer Anzünderschale, die mit Füßen auf dem Boden der Wannenstruktur aufsteht. Ein Lufteinlassrohr ist durch den Boden der Wannenstruktur hindurchgeführt und mündet in der Anzünderschale unterhalb des gelochten Bodens des Brennstoffbehälters.

Der Boden der Wannenstruktur dieses vorbekannten Grills erhöht sich ausgehend von dem Übergang der umlaufenden Seitenwand in den Boden in Richtung zu dem zentrisch angeordneten Lufteinlassrohr. Herabtropfende Grill- oder Garflüssigkeiten, insbesondere Fett sammelt sich somit in der umlaufenden bodenseitigen Randvertiefung der Wannenstruktur.

Die durch die in dem Brennstoffbehälter glühende Holzkohle abgegebene Wärme erwärmt auf dem Grillrost befindliches Gargut durch die thermisch aufsteigende heiße Luft und durch die von der umlaufenden Wand des Brennstoffbehälters abgestrahlte IR-Strahlung. Diese wird an der Innenseite der umlaufenden Wand der Wannenstruktur reflektiert. Das sich in der bodenseitigen Randvertiefung der Wannenstruktur ansammelnde Fett kann sich bei einem Betrieb des Grills mit erhöhter Luftzufuhr, bei der die in dem Brennstoffbehälter glühende Kohle mit höherer Temperatur glüht, entzünden. Dieses ist, da ein solcher Grill typischerweise als Tischgrill verwendet wird, unerwünscht, vor allem dann, wenn der Grill als Tischgrill innerhalb eines Gebäudes verwendet wird.

Ein weiterer Grill dieser Art ist aus WO 01/22854 A1 bekannt. Auch bei diesem Grill befindet sich der Brennstoffbehälter innerhalb einer Wannenstruktur, in die von den auf dem Rost liegenden zu garenden Nahrungsmitteln herabtropfende Garflüssigkeit, insbesondere Öl und Fett sich ansammelt. Diese Wannenstruktur ist ebenso wie bei dem aus EP 2 785 227 B1 bekannten Grill in ein zylindrisches Gehäuse eingesetzt. Zwischen dem oberen und einem unteren Teil befindet sich ein Luftzuführungsspalt, damit von unten in den Brennstoffbehälter Luft zugeführt werden kann.

WO 2009/105099 A1 offenbart einen Holzkohle-BBQ-Grill. Dieser verfügt über eine Wannenstruktur. In dieser befindet sich eine Holzkohlenwanne, die sich über die gesamte Erstreckung der Wanne ausdehnt und deren Boden von dem Boden der Wanne beabstandet ist. In dem Boden der Wanne befindet sich eine Öffnung zum Auslassen von Garflüssigkeiten und/oder von Asche.

Ein weiterer Holzkohlegrill ist aus DE 20 2016 106 951 U1 mit den weiteren Merkmalen des Oberbegriffs des Anspruchs 1 bekannt. Der Brennstoffbehälter ist von einer Aschtasche eingefasst. Radial außenseitig bezüglich der Aschtasche befindet sich eine Ölaufnahmetasche, mithin eine Wannenstruktur, in der sich von dem oder den auf dem Rost befindlichen Lebensmitteln herabtropfende Flüssigkeiten ansammeln können.

Ausgehend von dem eingangs diskutierten Stand der Technik liegt der Erfindung daher die Aufgabe zugrunde, einen Grill der eingangs genannten Art dergestalt weiterzubilden, dass insbesondere dessen Betriebssicherheit mit Blick auf den vorstehend gewürdigten Stand der Technik verbessert ist.

Gelöst wird diese Aufgabe erfindungsgemäß durch ein eingangs genanntes, gattungsgemäßes Grillgerät mit den Merkmalen des Anspruchs 1.

Bei diesem Grill, der sich durchaus als Tischgrill auch zur Anwendung im Innenbereich eignet, ist der Bodenbereich der Wannenstruktur durch einen den Brennstoffbehälter einfassenden Schild vor einer direkten Wärmeeinstrahlung geschützt. Dieser Schild erstreckt sich zwischen der Außenseite des Brennstoffbehälters im Bereich seines unteren Abschlusses und somit unterhalb seiner Wärmeabgabezone in radialer Richtung nach außen in Richtung zu der Seitenwand der Wannenstruktur. Durch diesen Schild, der gemäß einer möglichen Ausgestaltung in radialer Richtung nach außen abfallend geneigt ist, damit darauf auftreffendes Öl oder Fett daran in Richtung zu der Seitenwand herablaufen kann, braucht sich grundsätzlich nicht bis zur Seitenwand der Wannenstruktur erstrecken, sondern nur so weit, dass der oder die Bodenbereiche der Wannenstruktur, in bzw. auf denen sich Garflüssigkeiten und somit insbesondere Öl oder Fett ansammeln kann, gegenüber einer direkten Wärmeabstrahlung des Brennstoffbehälters durch den Schild abgeschattet sind. In einer Ausgestaltung des Grills ist vorgesehen, dass sich der Schild bis an die umlaufende Wand der Wannenstruktur heran erstreckt. Der radial äußere Abschluss des Schildes befindet sich vorzugsweise im Bereich der Seitenwand der Wannenstruktur mit Abstand zu dem Übergang von der Seitenwand der Wannenstruktur in den Boden. Damit auf der Oberseite des Schildes auftreffende Garflüssigkeit, insbesondere Öl und Fett bei einer Ausgestaltung, bei der der Schild bis an die Seitenwand der Wannenstruktur herangeführt ist, aus der direkten Erwärmungszone weggeführt wird, ist bei einer Ausgestaltung zwischen dem äußeren Abschluss des Schildes und der Seitenwand der Wannenstruktur zumindest eine Ablauföffnung vorhanden. Diese kann durch einen entsprechenden Ausschnitt im radialen Randbereich des Schildes bereitgestellt sein. Typischerweise sind mehrere derartige Garflüssigkeitsablauföffnungen vorgesehen. Gemäß einem Ausführungsbeispiel befinden sich diese bei einer Ausgestaltung der Wannenstruktur mit einer rechteckförmigen Grundfläche im Bereich der typischerweise gerundet ausgeführten Seitenwandkanten. Bei einer solchen Ausgestaltung ist der Krümmungsradius des Schildes in seinen Ecken größer als der Krümmungsradius der aneinandergrenzenden Seitenwände.

Der den Brennstoffbehälter einfassende Schild kann in radialer Richtung, wie bereits beschrieben, nach außen in Richtung zum Boden der Wannenstruktur geneigt ausgebildet sein. Die Neigung wird man typischerweise mit einem konstanten oder in etwa konstanten Neigungswinkel ausführen. In einer anderen Ausgestaltung ist vorgesehen, den Schild als horizontale, in der Wannenstruktur gehaltene Scheibe auszuführen, in der mehrere Öffnungen zum Durchlassen der darauf herabtropfenden Garflüssigkeit eingebracht sind. Diese Öffnungen können in in den Schild eingeprägten Vertiefungen angeordnet sein. Möglich ist auch eine Ausgestaltung des Schildes, der quer zu seiner radialen Erstreckung gewellt ausgeführt ist, wobei in den Sohlen der Wellentäler Öffnungen zum Abfließenlassen von Garflüssigkeiten eingebracht sind. Bei einer solchen Ausgestaltung sind diese Abflussöffnungen und die als anfängliche Garflüssigkeitssammelrinnen fungierenden Wellentäler zumindest teilweise durch die benachbarten Wellenberge gegenüber einer direkten Wärmeeinstrahlung abgeschattet.

Der Schild kann, wie in einer weiteren Ausgestaltung vorgesehen, auch ausgehend von dem Brennstoffbehälter in Richtung zur Seitenwand der Wannenstruktur ansteigend geneigt ausgeführt sein. Bei einer solchen Ausgestaltung befinden sich die Garflüssigkeitsablauföffnungen in unmittelbarer Nachbarschaft zu dem radialen unteren Abschluss des Brennstoffbehälters.

Zwischen dem radial äußeren Abschluss des Brennstoffbehälters und dem Schild kann ein Spalt vorhanden sein.

Die vorstehenden Ausführungen zu der Auslegung eines Schildes sollen mögliche Beispiele einer Ausführung vorstellen. Diese ist nicht abschließend.

Bei diesem Grill wird das bei seinem Betrieb von dem Grill- bzw. Gargut herabtropfende Öl oder Fett aufgrund des Vorsehens des die Brennstoffkammer einfassenden Schildes aus dem Bereich der direkten Wärmeeinstrahlung des Brennstoffbehälters weggeführt und sammelt sich in einem Bereich direkter Wärmeinstrahlung nicht an.

Gesammelt werden können diese und auch andere Garflüssigkeiten beispielsweise in bzw. auf entsprechenden Strukturen des Bodens der Wannenstruktur oder auch außerhalb derselben, wenn der Boden der Wannenstruktur ein oder mehrere Garflüssigkeitsablauföffnungen aufweist und unterhalb des Bodens der Wannenstruktur beispielsweise wenigstens eine Fettauffangwanne angeordnet ist. Um eine einfache Handhabung der Fettauffangwanne zu ermöglichen, ist diese in einer möglichen Ausgestaltung der Erfindung als Fettauffangschublade ausgeführt, kann mithin unter die Wannenstruktur eingeschoben und aus dieser herausgezogen werden.

Bei einer Ausgestaltung des Grills, bei der sich unterhalb der Wannenstruktur ein Garflüssigkeitssammler befindet und der Boden eine Öffnung zum Abfließenlassen von darin angesammelter Garflüssigkeit aufweist, bildet der Boden der Wannenstruktur einen wirksamen Schild zum Abschirmen des Garflüssigkeitssammlers gegenüber einer direkten Wärmebestrahlung durch den Brennstoffbehälter. Bei einer solchen Auslegung des Grills braucht dieser nicht notwendigerweise über einen zusätzlichen, den Boden der Wannenstruktur gegenüber einer direkten Wärmebestrahlung abschirmenden Schild zu verfügen.

Aufgrund der Abschirmung der sich unvermeidbar auf den Boden der Wannenstruktur ansammelnden Garflüssigkeiten, insbesondere der brennbaren Öl- und/oder Fettbestandteile, gegenüber einer direkten Wärmebestrahlung durch den Brennstoffbehälter ist die Betriebssicherheit des Grills gegenüber einem unerwünschten Öl- bzw. Fettabbrand deutlich verbessert. Überdies dient die Oberseite des Schildes zur Reflektion von darauf auftreffender, von dem Brennstoffbehälter emittierten Wärmestrahlung. Infolge der nach außen ausgehend von dem Brennstoffbehälter abfallend geneigten Ausbildung des Schildes wird die Wärmestrahlung in Richtung zu der Seitenwand der Wannenstruktur reflektiert und von dieser zu dem sich über die obere Öffnung der Wannenstruktur erstreckenden Grillrost. Aus diesem Grunde ist die Seitenwand der Wannenstruktur entsprechend geneigt ausgeführt, typischerweise mit einer sich zum Boden der Wannenstruktur hin gerichteten Verjüngung. Dieser Schild, der beispielsweise ein Stahlblechteil ist, wird bei entsprechender Erwärmung selbst zum Wärmestrahler. Insofern kommt dem Schild bei diesem Grill eine zweifache Funktion zu. Aufgrund der bewirkten Wärmereflektion wird auch die von dem Brennstoffbehälter abgegebene, in Richtung zum Boden der Wannenstruktur gerichtete Wärme zum Grillrost reflektiert, wodurch nicht nur die Wärmeausbeute verbessert, sondern insbesondere die Gleichmäßigkeit der Wärmeverteilung über die Oberfläche des Grillrostes sehr viel homogener ist. Allerdings erreicht der Schild keine solche Temperatur, dass durch seine Wärmeabstrahlung die Gefahr bestehen würde, dass unterhalb des Schildes angesammelte Garflüssigkeit in Brand geraten könnte.

Der Einsatz eines solchen Schildes ist nicht nur bei solchen Grills möglich, bei der die Innenfläche der Wannenstruktur kreisförmig und die Mantelfläche der Brennstoffkammer zylindrisch ist. Vielmehr kann dieses Konzept auch bei solchen Grills zum Einsatz kommen, die beispielsweise eine rechteckförmige oder in etwa rechteckförmige Wannenstruktur mit einem darin befindlichen Brennstoffbehälter gleicher oder ähnlicher Mantelfläche oder mit einer ovalen Mantelfläche aufweisen.

In einer Ausgestaltung ist vorgesehen, dass der Brennstoffbehälter im Bereich seines unteren Abschlusses einen oder auch mehrere radial nach außen ausgestellte Mitnehmer als Schildhalter aufweist. Auf diesen liegt der Schild mit seiner Unterseite auf. Dieser zumindest eine Mitnehmer dient dem Zweck, dass bei einer Entnahme des Brennstoffbehälters aus der Wannenstruktur zugleich der Schild mit aus der Wannenstruktur herausgenommen wird. Der Schild liegt bei dieser Ausgestaltung typischerweise lose an der Außenseite des Brennstoffbehälters an und wird durch den zumindest einen Mitnehmer an seiner Unterseite abgestützt. Erstreckt sich der Schild bis an die Innenseite der Seitenwand der Wannenstruktur, liegt dieser auch nur lose an der Seitenwand an. Ist nur ein Mitnehmer vorgesehen, wird man diesen vorzugsweise umlaufend ausführen. Ist der Schild ausgehend von dem Brennstoffbehälter in Richtung zu der Seitenwand der Wannenstruktur in Richtung zum Boden derselben geneigt, ist ebenfalls der Mitnehmer entsprechend geneigt ausgelegt. Dieser ist dann typischerweise als umlaufender Kragen ausgeführt. Ein solcher umlaufender Mitnehmer kann zugleich als Montagelehre bzw. Montagehilfe genutzt werden, um den Brennstoffbehälter mit seinem Boden positionsgenau auf eine Anzünderschale aufsetzen zu können, die sodann mit ihrer außenseitig umlaufenden Wand unter den geneigt ausgeführten Mitnehmer greift.

Der Brennstoffbehälter selbst erstreckt sich typischerweise bis in den Bereich des oberseitigen Abschlusses der Wannenstruktur und somit nahe bis an die Unterseite des Grillrostes. Da sich der Grillrost typischerweise etwas oberhalb des oberen Abschlusses der Wannenstruktur befindet, kann sich der obere Abschluss des Brennstoffgehäuses auch bis oberhalb des oberen Abschlusses der Wannenstruktur erstrecken.

In einem Ausführungsbeispiel, welches besonders flachbauend ausgeführt werden kann, entspricht der Durchmesser des Brennstoffbehälters etwa der Hälfte der oberen Öffnungsweite der Wannenstruktur. Der Brennstoffbehälter selbst befindet sich typischerweise mittig innerhalb der Wannenstruktur. Bei einer solchen Ausgestaltung beträgt der Durchmesser des Brennstoffbehälters etwa 40 bis 60 % der in derselben Richtung messenden Öffnungsweite der Wannenstruktur. Diese Angabe gilt auch bei Grills mit bezüglich ihrer Fläche nicht rotationssymmetrischen Wannenstrukturen. Dann gilt diese Angabe für die Lang- und die Kurzachse, wenn die Wannenstruktur rechteckförmig ausgeführt ist.

Nachstehend ist die Erfindung anhand eines Ausführungsbeispiels unter Bezugnahme auf die beigefügten Figuren beschrieben. Es zeigen:
- **Fig. 1:**: Eine perspektivische Ansicht eines als Tischgrill einsetzbaren Grills,
- **Fig. 2:**: ein Querschnitt durch den Grill der Figur 1 in Schnittebene seiner kurzen Seite,
- **Fig. 3:**: ein Querschnitt durch den Grill der Figur 1 in Schnittebene seiner langen Seite,
- **Fig. 4:**: eine perspektivische Ansicht des Brennstoffbehälters des Grills der vorstehenden Figuren,
- **Fig. 5:**: in einer perspektivischen Alleindarstellung ein am Brennstoffbehälter gehaltener Schild des Grills der Figuren 1 bis 3 und
- **Fig. 6:**: eine perspektivische Draufsicht auf den Grill der Figuren 1 bis 3 mit abgenommenen Rost.

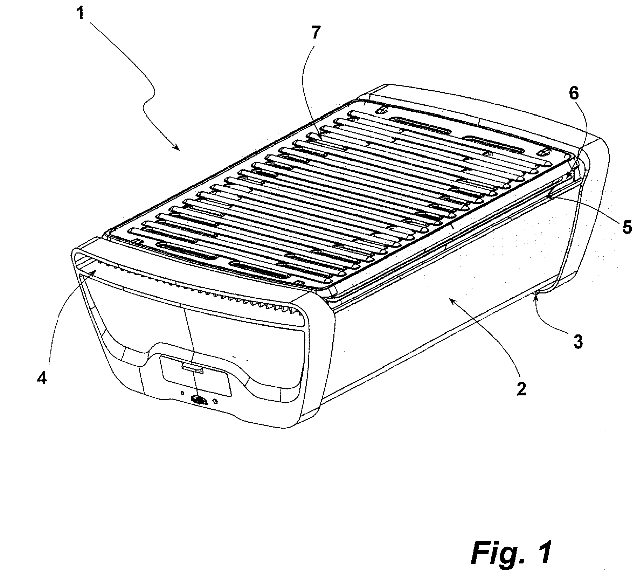

Ein als Holzkohlegrill ausgelegter Grill 1 ist bei dem dargestellten Ausführungsbeispiel mit einer in etwa rechteckförmigen Grundfläche ausgeführt. Der Grill 1 umfasst ein Gehäuse 2. Das Gehäuse 2 ist an seinen Schmalseitenenden über Füße 3 bodenseitig abgestützt. Die Schmalseitenenden des Gehäuses 2 verfügen über Handhabungskonturen 4, an denen der Grill 1, ohne diesen untergreifen zu müssen, gehandhabt werden kann. Die Schmalseitenendstücke des Grills 1 sind aus Kunststoff hergestellt. Zwischen den Schmalseitenendstücken befindet sich ein trogförmig ausgeführtes, die Schmalseitenendstücke verbindendes Metallteil als weiterer Bestandteil des Gehäuses 2. In das Gehäuse 2 ist eine Wannenstruktur 5 eingehängt, von der in Figur 1 so gut wie nur ihr umlaufender, radial nach außen abragender Flansch 6 erkennbar ist. Oberhalb der Wannenstruktur 5 befindet sich ein Rost 7. Das Gehäuse 2 ist aus einem wärmebeständigen Kunststoff hergestellt. Die Wannenstruktur 5 ist ein tiefgezogenes Stahlblechteil. Bei dem Rost 7 handelt es sich um ein Gußeisenprodukt.

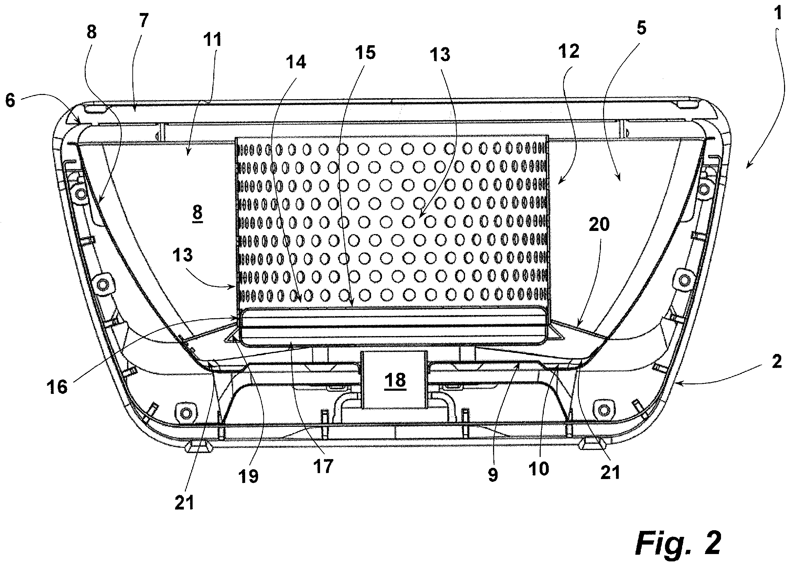

Der Aufbau des Grills 1 ist detaillierter der Schnittdarstellung der Figur 2 entnehmbar. Die in das Gehäuse 2 eingehängte Wannenstruktur 5 weist eine umlaufende Seitenwand 8 auf. Die Seitenwandabschnitte sind durch gerundet ausgeführte Kanten miteinander verbunden. Die Wannenstruktur 5 trägt unterseitig einen Boden 9. Der Boden 9 ist profiliert und verfügt über eine bodenseitig vor dem Übergang in die Seitenwand 8 eingebrachte umlaufende Rinne 10. Die Rinne 10 ist dadurch ausgebildet, dass der mittlere Bereich des Bodens 9 gegenüber der Sohle der Rinne 10 in Richtung zur oberen Öffnung 11 der Wannenstruktur verkröpft ist. Die Seitenwand 8 ist ausgehend von ihrem oberen, durch den Flansch 6 gebildeten Abschluss in Richtung zu dem Boden hin geneigt, sodass die Fläche des Bodens 9 deutlich kleiner als die durch die oberseitige Öffnung 11 bereitgestellte Fläche ist. Die Verjüngung der Seitenwand 8 zu dem Boden 9 hin erfolgt auf einer gekrümmten Bahn mit in Richtung zum Boden 9 hin größer werdendem Krümmungsradius.

Innerhalb der Wannenstruktur 5 befindet sich ein Brennstoffbehälter 12. Dieser ist bei dem dargestellten Ausführungsbeispiel elliptisch ausgeführt, wobei die Langachse der elliptischen Form der Langsachse des rechteckförmigen Grills 1 bzw. der Wannenstruktur 5 folgt. Der Brennstoffbehälter 12 dient zur Aufnahme des zum Betreiben des Grills 1 eingesetzten Brennstoffes, wobei als Brennstoff typischerweise Holzkohle eingesetzt wird. Der Brennstoffbehälter 12 umfasst eine umlaufende, bei dem dargestellten Ausführungsbeispiel sich vertikal erstreckende Wand 13. Diese ist wärme- und verbrennungsgasdurchlässig. Bei dem dargestellten Ausführungsbeispiel ist die umlaufende Wand 13 des Brennstoffbehälters 12 als Lochblech ausgeführt. Anstelle eines Lochbleches kann die umlaufende Wand auch aus einem anderen, über die Fläche in einem zumindest einigermaßen regelmäßigen Rasterabstand aufweisende Öffnungen bereitstellenden Teil realisiert sein, wie beispielsweise einem Streckmetall oder einen Drahtgestrick. Der Brennstoffbehälter 12 ist unterseitig durch ein nach Art einer Halbschale ausgelegtes Bodenteil 14 verschlossen. Das Bodenteil 14 verfügt über einen die umlaufende Wand 13 unterseitig verschließenden Boden 15 und eine daran angeformte und gegenüber der Ebene des Bodens 15 abgewinkelte umlaufende Wand 16. In dem Boden 15 sind Durchbrechungen eingebracht, um Verbrennungsluft in den Brennstoffbehälter 12 einbringen zu können. Das nach Art einer Halbschale ausgebildete Bodenteil 14 ist nach unten offen und stellt die obere Halbschale eines bei einem Betrieb des Grills 1 mit einer unteren Halbschale gebildeten Zuluftsammlers dar. Die untere Halbschale ist zugleich eine Anzünderschale 17, in die zum Anstecken von in den Brennstoffbehälter 12 eingelegter Holzkohle ein Anzündegel oder dergleichen eingelegt wird. Die Anzünderschale 17 weist dieselbe Geometrie auf wie das Bodenteil 14, ist jedoch bezüglich ihrer Öffnung nach oben offen, wie aus Figur 1 ersichtlich, gehalten. In die Anzünderschale 17 mündet ein Zuluftrohr 18. Die umlaufende Wand 13 des Brennstoffbehälters 12 ist außenseitig an der Wand 16 des Bodenteils 14 befestigt, beispielsweise durch Punktschweißungen. Der Brennstoffbehälter 12 trägt als Verlängerung seiner umlaufenden Wand 13 unterseitig einen in radialer Richtung nach außen ausgestellten, in Richtung zu dem Boden 9 geneigten Kragen 19.

Der Grill 1 verfügt des Weiteren über einen den Brennstoffbehälter 12 oberhalb seines Kragens 19 geordneten Schild 20, der sich von der äußeren Mantelfläche der umlaufenden Wand 13 bis zu der Seitenwand 8 der Wannenstruktur 5 erstreckt. Der Schild 20 ist bei dem dargestellten Ausführungsbeispiel in radialer Richtung nach außen in Richtung zu dem Boden 9 der Wannenstruktur 5 geneigt, damit darauf auftreffende Garflüssigkeit von dem Brennstoffbehälter 12 weg in Richtung zu der Seitenwand 8 der Wannenstruktur 5 abfließen kann. Bei dem Schild 20 handelt es sich um ein Stahlblechteil. Bei dem dargestellten Ausführungsbeispiel erstreckt sich der Schild 20 bis an die Seitenwand 8 der Wannenstruktur 5 heran. Der Schild 20 ist in Längs- und in Querrichtung der Wannenstruktur 5 gewölbt. Erreicht wird hierdurch, dass die gerundeten Ecken des Schildes 20 jeweils bodennäher angeordnet sind als die zwischen den benachbarten Ecken angeordneten Krümmungsscheitel. Auf die Oberseite des Schildes 20 auftreffende Garflüssigkeit wird somit nicht nur zu der benachbarten umlaufenden Seitenwand 8 der Wannenstruktur 5 geleitet, sondern zudem jeweils zu einer Eckausbildung des Schildes 20 bzw. einer gerundeten Kantenausbildung der umlaufenden Wand 8 im Übergang von einer Längsseite der Wannenstruktur in eine Querseite. In diesen Eck- bzw. Kantenbereichen liegt der Schild 20 nicht an der Seitenwand 8 der Wannenstruktur 5 an. Auf diese Weise sind Garflüssigkeitsablauföffnungen 21 bereitgestellt, durch die auf die Oberseite des Schildes 20 auftreffende Garflüssigkeit von der Oberseite des Schildes 20 abfließen kann. Gesammelt wird diese Flüssigkeit auf dem Boden 9 bzw. zunächst seiner umlaufenden Rinne 10, die auch als Garflüssigkeitssammelrinne angesprochen werden kann.

Die sich somit auf dem Boden 9 bzw. seiner Garflüssigkeitssammelrinne 10 ansammelnde Garflüssigkeit, insbesondere Öl und Fett ist durch den Schild 20 wirksam vor einer direkten Erwärmung durch den Brennstoffbehälter 12 bzw. der darin glühenden Holzkohle geschützt. Die Gefahr eines Fett- oder Ölbrandes besteht bei dem Grill 1 daher nicht.

In die Luftzuführung über das Luftzuführrohr 18 in den durch die beiden Halbschalen - des Bodenteils 14 einerseits und der Anzünderschale 17 andererseits - gebildeten Zuluftsammler ist eine ein elektromotorisch angetriebener Lüfter (in den Figuren nicht gezeigt) eingeschaltet, über den Volumenstrom des Zuluftstromes eingestellt werden kann.

Von Besonderheit ist bei dem Grill 1, dass sich die umlaufende Wand 13 des Brennstoffbehälters 12 bis knapp an die Unterseite des Rostes 7 erstreckt. Belassen ist zwischen dem oberen Abschluss der Wand 13 und dem Rost 7 nur ein geringen Abstandspalt A, der bei dem dargestellten Ausführungsbeispiel etwa 1 cm beträgt. Der Brennstoffbehälter 12 ist oberseitig nicht verschlossen. Durch diese Maßnahme strömen die oberseitig aus dem Brennstoffbehälter 12 austretenden heißen Verbrennungsgase konzentriert die Unterseite eines geschlossen ausgeführten zentralen Rostbereich 22 des Rostes 7 an und werden an diesem in radialer Richtung nach außen umgelenkt.

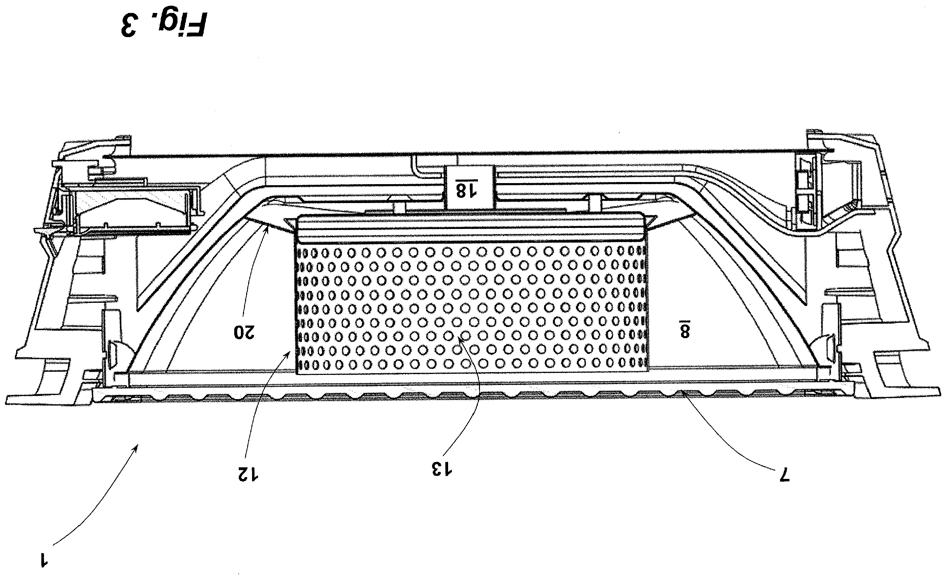

Figur 3 zeigt den Grill 1 in einem Längsschnitt. Die bereits zu dem Grill 1 anhand seines Querschnittes der Figur 2 erläuterten Merkmale sind ebenfalls diesem Längsschnitt zu entnehmen.

Der Brennstoffbehälter 12 sitzt mit seinem Bodenteil 14 lose auf der Anzünderschale 17. Somit kann der Brennstoffbehälter 12 ohne Weiteres aus der Wannenstruktur 5 herausgenommen werden, um diesen mit Holzkohle zu befüllen und um Zugang zu der Anzünderschale 17 zu erhalten, um darin für das Anzünden der in dem Brennstoffbehälter 12 enthaltenen Holzkohle ein Anzündemittel, beispielsweise ein Anzündergel einbringen zu können. Der Brennstoffbehälter 12 wird zu diesem Zweck schlichtweg angehoben und aus der Wannenstruktur 5 herausgehoben. Aufgrund des umlaufenden, in radialer Richtung nach außen ausgestellten Kragens 19 dient dieser als Mitnehmer für den darüber befindlichen Schild 20. Somit wird bei einer Entnahme des Brennstoffbehälters 12 aus der Wannenstruktur 5 der Schild 20 zusammen mit aus der Wannenstruktur 5 herausgenommen. Ist der Brennstoffbehälter 12 mit dem Schild 20 aus der Wannenstruktur 5 herausgenommen, ist auch der Blick auf den Boden 9 der Wannenstruktur 5 frei, sodass überprüft werden kann, ob dem Boden 9 von darauf angesammelter Garflüssigkeit gereinigt werden muss oder nicht. Beim Einsetzen des Brennstoffbehälters 12 in die Wannenstruktur 5 übernimmt der Kragen 19 eine Führungs- bzw. Findungsfunktion, damit das nach unten offene Bodenteil 14 mit der Stirnfläche seiner umlaufenden Wand 16 auf die nach oben weisende Stirnfläche der um laufenden Wand der Anzünderschale 17 positionsgenau aufgesetzt werden kann.

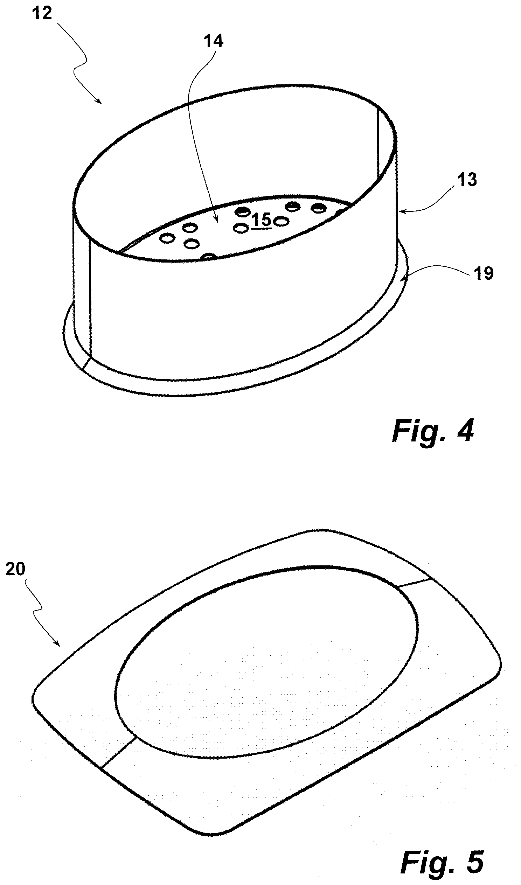

Figur 4 zeigt den Brennstoffbehälter 12 mit seiner umlaufenden Wand 13 und dem darin eingesetzten Bodenteil 14. Deutlich erkennbar sind die in den Boden 15 des Bodenteils 14 eingebrachten Brennluftdurchbrechungen.

Figur 5 zeigt den Schild 20 in einer perspektivischen isolierten Darstellung. Deutlich erkennbar ist darin seine bereits vorstehend beschriebene gewölbte Ausgestaltung in Längs- und in Querrichtung.

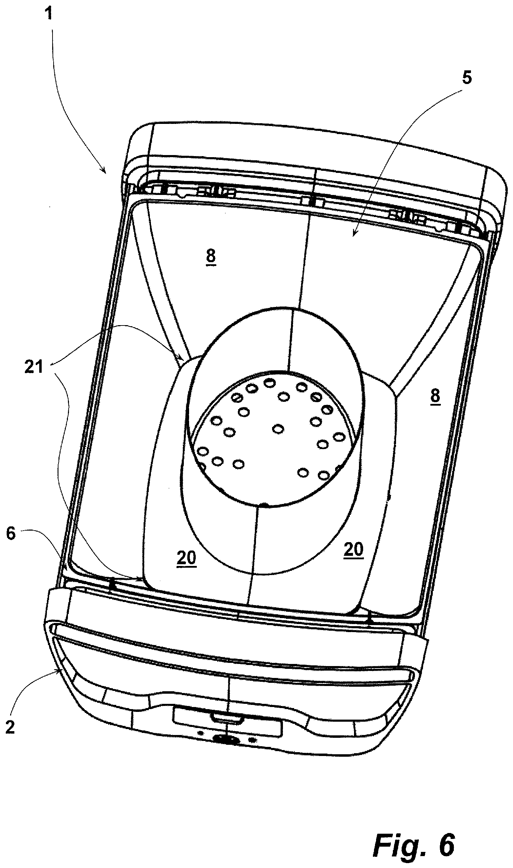

Figur 6 zeigt den Grill 1 in einer perspektivischen Draufsicht ohne seinen Grillrost 7. Die Garflüssigkeitsablauföffnungen zwischen dem Schild 20 und den Kanten der Seitenwand 8 der Wannenstruktur 5 sind darin mit den Bezugszeichen 21 kenntlich gemacht.

Der in dem in den Figuren beschriebenen Ausführungsbeispiel beschriebene Schild ist lose in die Wannenstruktur eingelegt. Es versteht sich, dass der Schild auch Teil des Brennstoffbehälters oder der Wannenstruktur sein kann.

Die Erfindung ist anhand eines Ausführungsbeispiels unter Bezugnahme auf die Figuren beschrieben worden. Ohne den Umfang der geltenden Ansprüche zu verlassen, ergeben sich für einen Fachmann zahlreiche weitere Möglichkeiten die Erfindung umzusetzen, ohne dass dieses im Einzelnen im Rahmen dieser Ausführungen angegeben werden müsste.

### Bezugszeichenliste

- 1: Grill
- 2: Gehäuse
- 3: Fuß
- 4: Handhabungskontur
- 5: Wannenstruktur
- 6: Flansch
- 7: Grillrost
- 8: Seitenwand
- 9: Boden
- 10: Rinne
- 11: Oberseitige Öffnung
- 12: Brennstoffbehälter
- 13: Umlaufende Wand
- 14: Bodenteil
- 15: Boden
- 16: Wand
- 17: Anzünderschale
- 18: Luftzufuhrrohr
- 19: Kragen
- 20: Schild
- 21: Garflüssigkeitsablauföffnung

## Patentansprüche

1. Grill mit einer oberseitig offenen, durch einen Boden und eine umlaufende Seitenwand (8) bereitgestellten Wannenstruktur (5), die ihrerseits in einem Gehäuse (2) angeordnet ist, zum Ansammeln von Garflüssigkeiten, mit einem in der Wannenstruktur (5) angeordneten Brennstoffbehälter (12), dessen Boden (15) von dem Boden (9) der Wannenstruktur (5) und dessen in radialer Richtung nach außen weisender Abschluss von der umlaufenden Seitenwand (8) der Wannenstruktur (5) beabstandet sind, mit einer Luftzuführung zum unterseitigen Zuführen von Luft in den Brennstoffbehälter (12) und mit einem sich über die oberseitige Öffnung (11) der Wannenstruktur (5) erstreckenden Rost (7), **dadurch gekennzeichnet, dass** im Bereich des unteren Abschlusses des Brennstoffbehälters (12) ein den Brennstoffbehälter (12) einfassender, sich zwischen der Außenseite des Brennstoffbehälters (12) im Bereich seines unteren Abschlusses und somit unterhalb seiner Wärmeabgabezone in radialer Richtung nach außen in Richtung zur Seitenwand (8) der Wannenstruktur (5) so weit erstreckender Schild (20) angeordnet ist, dass der oder die bodenseitigen Bereiche der Wannenstruktur (5), in oder auf denen sich Garflüssigkeiten ansammeln können, gegenüber einer direkten Wärmebestrahlung durch den Brennstoffbehälter (12) abgeschirmt sind.

2. Grill nach Anspruch 1, **dadurch gekennzeichnet, dass** der Schild (20) bis an die umlaufende Seitenwand (8) der Wannenstruktur (5) herangeführt ist.

3. Grill nach Anspruch 2, **dadurch gekennzeichnet, dass** der Schild an die umlaufende Wand mit Abstand zu dem Übergang von der Seitenwand in den Boden der Wannenstruktur herangeführt ist.

4. Grill nach einem der Ansprüche 1 bis 3, **dadurch gekennzeichnet, dass** der Schild (20) in radialer Richtung ausgehend von dem Brennstoffbehälter (12) nach außen in Richtung zum Boden (9) abfallend geneigt ist.

5. Grill nach einem der Ansprüche 1 bis 3, **dadurch gekennzeichnet, dass** der Schild in radialer Richtung ausgehend von dem Brennstoffbehälter nach außen in Richtung von dem Boden wegweisend ansteigend geneigt ausgeführt ist.

6. Grill nach einem der Ansprüche 1 bis 3, **dadurch gekennzeichnet, dass** der Schild nach Art einer horizontalen Scheibe mit mehreren, darin eingebrachten Garflüssigkeitsdurchgangsöffnungen ausgeführt ist.

7. Grill nach einem der Ansprüche 1 bis 6, **dadurch gekennzeichnet, dass** zwischen dem radialen äußeren Abschluss des Schildes (20) und der Innenseite der Seitenwand (8) Ablauföffnungen (21) vorhanden sind.

8. Grill nach einem der Ansprüche 1 bis 7, **dadurch gekennzeichnet, dass** der Schild (20) innerhalb der Wannenstruktur (5) lose an der Außenseite des Brennstoffbehälters (12) und/oder der umlaufenden Seitenwand (8) der Wannenstruktur (5) abgestützt ist.

9. Grill nach Anspruch 8, **dadurch gekennzeichnet, dass** der Brennstoffbehälter (12) im Bereich seines unteren Abschlusses wenigstens einen in radialer Richtung nach außen ausgestellten Mitnehmer (19) aufweist, der unterhalb des Schildes (20) angeordnet ist, mit welchem zumindest einen Mitnehmer (19) bei Herausnahme des Brennstoffbehälters (12) der Schild (20) ebenfalls aus der Wannenstruktur (5) herausnehmbar ist.

10. Grill nach Anspruch 9, **dadurch gekennzeichnet, dass** der Mitnehmer als umlaufender Kragen (19) ausgeführt ist.

11. Grill nach einem der Ansprüche 1 bis 10, **dadurch gekennzeichnet, dass** der Brennstoffbehälter (12) oberseitig offen ist.

12. Grill nach einem der Ansprüche 1 bis 11, **dadurch gekennzeichnet, dass** sich der obere Abschluss des Brennstoffbehälters bis in den Bereich des oberen Abschlusses der Wannenstruktur (5) erstreckt.

13. Grill nach einem der Ansprüche 1 bis 12, **dadurch gekennzeichnet, dass** die Wannenstruktur (5) in ein Gehäuse (2) des Grills (1) eingehängt ist.

14. Grill nach einem der Ansprüche 1 bis 13, **dadurch gekennzeichnet, dass** unterhalb der Wannenstruktur zumindest ein Garflüssigkeitssammler angeordnet ist und der Boden der Wannenstruktur wenigstens eine Garflüssigkeitsablauföffnung aufweist, durch die Garflüssigkeit in den sich darunter befindlichen Garflüssigkeitssammler hindurchtreten kann, sodass der Boden der Wannenstruktur (5) ein Schild zum Abschirmen des Garflüssigkeitssammlers gegenüber einer direkten Wärmebestrahlung durch den Brennstoffbehälter ist.

15. Grill nach Anspruch 14, **dadurch gekennzeichnet, dass** der Garflüssigkeitssammler nach Art einer aus dem Grill herausnehmbaren und in dieses einschiebbaren Schublade ausgeführt ist.

## Claims

1. Barbecue with a trough structure (5), provided by a base and a circumferential side wall (8), which in turn is arranged in a housing (2), for collecting cooking fluids, with a fuel container (12) arranged in the trough structure (5), the base (15) of which is arranged at a distance from the base (9) of the trough structure (5), and of which the termination region facing outwards in the radial direction is arranged at a distance from the circumferential side wall (8) of the trough structure (5), with an air conduit for delivering air on the under side into the fuel container (12), and with a grating (7) extending over the opening (11) on the upper side of the trough structure (5), **characterised in that,** arranged in the region of the lower termination region of the fuel container (12), is a screen (20), covering the fuel container (12), and extending between the outer side of the fuel container (12) in its lower termination region, and therefore extending beneath its heat-emitting zone in a radial direction outwards, in the direction outwards in the direction of the side wall (8) of the trough structure (5), sufficiently far that the base-side region(s) of the wall structure (5), in or on which cooking fluids can collect, is or are screened against direct heat radiation by the fuel container (12).

2. Barbecue according to claim 1, **characterised in that** the screen (20) is extended as far as the circumferential side wall (8) of the trough structure (5).

3. Barbecue according to claim 2, **characterised in that** the screen is extended to the circumferential wall with a spacing interval to the transition from the side wall into the base of the trough structure.

4. Barbecue according to any one of claims 1 to 3, **characterised in that** the screen (20) is inclined as falling away outwards in the direction towards the base (9) in the radial direction, starting from the fuel container (12).

5. Barbecue according to any one of claims 1 to 3, **characterised in that** the screen is configured as inclined in the radial direction, rising outwards in the direction pointing away from the base, starting from the fuel container.

6. Barbecue according to any one of claims 1 to 3, **characterised in that** the screen is configured in the form of a horizontal disk with a plurality of cooking fluid openings introduced into it.

7. Barbecue according to any one of claims 1 to 6, **characterised in that** runoff openings (21) are provided between the radial outer termination region of the screen (20) and the inner side of the side wall (8).

8. Barbecue according to any one of claims 1 to 7, **characterised in that** the screen (20) is supported inside the trough structure (5) loose on the outer side of the fuel container (12) and/or of the circumferential side wall (8) of the trough structure (5).

9. Barbecue according to claim 8, **characterised in that** the fuel container (12) comprises, in the region of its lower termination region, at least one driving carrier (19), facing outwards in the radial direction, which is arranged underneath the screen (20), with which said at least one driving carrier (19), the screen (20) can likewise be taken out of the trough structure (5) when the fuel container (12) is removed.

10. Barbecue according to claim 9, **characterised in that** the driving carrier is configured with circumferential collars (19).

11. Barbecue according to any one of claims 1 to 10, **characterised in that** the fuel container (12) is open on the upper side.

12. Barbecue according to any one of claims 1 to 11, **characterised in that** the upper termination region of the fuel container extends as far as into the region of the upper termination region of the trough structure (5).

13. Grill according to any one of claims 1 to 12, **characterised in that** the trough structure (5) is suspended into a housing (2) of the grill (1).

14. Barbecue according to any one of claims 1 to 13, **characterised in that** at least one cooking fluid collector is arranged underneath the trough structure, and the base of the trough structure exhibits at least one fluid runoff opening, through which the cooking fluid can pass into the fluid collector located beneath, such that the base of the trough structure (5) is a screen for screening the cooking fluid collector against direct heat radiation incurred by the fuel container.

15. Barbecue according to claim 14, **characterised in that** the cooking fluid collector is configured in the form of a drawer, which can be drawn out of the barbecue and slid into it.

## Revendications

1. Appareil à griller comportant une structure de cuvette (5) ouverte sur le dessus, mise à disposition par un fond et une paroi latérale (8) circonférentielle, elle-même disposée dans un logement (2) destiné à collecter les sucs de cuisson, avec, disposé dans la structure de cuvette (5), un réservoir de combustible (12), dont le fond (15) est à distance du fond (9) de la structure de cuvette (5) et dont la terminaison, orientée dans le sens radial vers l'extérieur, est à distance de la paroi latérale (8) circonférentielle de la structure de cuvette (5), avec une arrivée d'air afin d'acheminer de l'air par le dessous jusqu'au réservoir de combustible (12) et avec une grille (7) s'étendant sur l'ouverture (11) du dessus de la structure de cuvette (5), **caractérisé en ce qu'**un bouclier (20) est placé au niveau de la terminaison inférieure du réservoir de combustible (12), entourant le réservoir de combustible (12), s'étendant entre la face extérieure du réservoir de combustible (12), au niveau de sa terminaison inférieure et par conséquent sous sa zone de diffusion de chaleur dans le sens radial vers l'extérieur, en direction de la paroi latérale (8) de la structure de cuvette (5), de telle sorte que la ou les zones de fond de la structure de cuvette (5), dans ou sur laquelle ou lesquelles les sucs de cuisson peuvent s'accumuler, sont protégées du rayonnement direct de chaleur émis par le réservoir de combustible (12).

2. Appareil à griller selon la revendication 1, **caractérisé en ce que** le bouclier (20) suit la paroi latérale (8) circonférentielle de la structure de cuvette (5).

3. Appareil à griller selon la revendication 2, **caractérisé en ce que** le bouclier suit la paroi circonférentielle à distance de la transition entre la paroi latérale et le fond de la structure de cuvette.

4. Appareil à griller selon l'une des revendications 1 à 3, **caractérisé en ce que** le bouclier (20) est incliné vers le bas dans le sens radial, en partant du réservoir de combustible (12) vers l'extérieur, en direction du fond (9).

5. Appareil à griller selon l'une des revendications 1 à 3, **caractérisé en ce que** le bouclier est incliné vers le haut dans le sens radial, en partant du réservoir de combustible vers l'extérieur, en s'éloignant du fond.

6. Appareil à griller selon l'une des revendications 1 à 3, **caractérisé en ce que** le bouclier est conformé à la manière d'une vitre horizontale dans laquelle sont aménagées plusieurs ouvertures de passage des sucs de cuisson.

7. Appareil à griller selon l'une des revendications 1 à 6, **caractérisé en ce que** des ouvertures d'écoulement (21) sont aménagées entre la terminaison extérieure radiale du bouclier (20) et la face intérieure de la paroi latérale (8).

8. Appareil à griller selon l'une des revendications 1 à 7, **caractérisé en ce que** le bouclier (20) est en appui sans fixation à l'intérieur de la structure de cuvette (5) sur la face extérieure du réservoir de combustible (12) et/ou sur la paroi latérale (8) circonférentielle de la structure de cuvette (5).

9. Appareil à griller selon la revendication 8, **caractérisé en ce que** le réservoir de combustible (12) présente, placé sous le bouclier (20), au niveau de sa terminaison inférieure, au moins un toc d'entraînement (19) en saillie vers l'extérieur dans le sens radial, à l'aide duquel au moins un toc d'entraînement (19) le bouclier (20) peut également être extrait de la structure de cuvette (5) lors de l'extraction du réservoir de combustible (12).

10. Appareil à griller selon la revendication 9, **caractérisé en ce que** le toc d'entraînement est conformé en collerette (19) circonférentielle.

11. Appareil à griller selon l'une des revendications 1 à 10, **caractérisé en ce que** le réservoir de combustible (12) est ouvert sur le dessus.

12. Appareil à griller selon l'une des revendications 1 à 11, **caractérisé en ce que** la terminaison supérieure du réservoir de combustible s'étend jusqu'au niveau de la terminaison supérieure de la structure de cuvette (5).

13. Appareil à griller selon l'une des revendications 1 à 12, **caractérisé en ce que** la structure de cuvette (5) est suspendue dans un logement (2) de l'appareil à griller (1).

14. Appareil à griller selon l'une des revendications 1 à 13, **caractérisé en ce qu'**au moins un collecteur de sucs de cuisson est placé sous la structure de cuvette et le fond de la structure de cuvette présente au moins une ouverture d'écoulement des sucs de cuisson, par laquelle les sucs de cuisson peuvent s'écouler dans le collecteur de sucs de cuisson se trouvant en dessous, de sorte que le fond de la structure de cuvette (5) est un bouclier destiné à protéger le collecteur de sucs de cuisson des rayonnements directs de chaleur émis par le réservoir de combustible.

15. Appareil à griller selon la revendication 14, **caractérisé en ce que** le collecteur de sucs de cuisson est conformé à la manière d'un tiroir qui peut être retiré de l'appareil à griller et réengagé dans celui-ci.
